# EUROPÄISCHE PATENTSCHRIFT

(11) **EP 2 266 832 B1**
(45) Veröffentlichungstag und Bekanntmachung des Hinweises auf die Patenterteilung: **23.11.2011**
(21) Anmeldenummer: 10167339.0
(22) Anmeldetag: 25.06.2010
(51) Int. Cl.: B60K 26/02, B60T 7/08, B60T 7/10, F16J 15/50, F16J 15/52

(54) **Abdeckung für eine Durchführung**
Cover for an aperture
Revêtement pour un passage

(30) Priorität: 26.06.2009 DE 102009030735
(43) Veröffentlichungstag der Anmeldung: 29.12.2010
(73) Patentinhaber: Ford-Werke GmbH, 50735 Köln (DE)
(72) Erfinder: Beyer, Thomas, 50735, Köln (DE); Higgins, Simon, 50767, Köln (DE)
(74) Vertreter: Drömer, Hans-Carsten

(56) Entgegenhaltungen:
- DE-U1- 20 120 923
- US-A- 4 522 081
- US-A- 4 581 951
- US-A- 4 991 457
- US-A- 5 016 485
- US-A- 5 941 123

## Beschreibung

Die Erfindung betrifft eine Abdeckung für eine Durchführung in einer Wand, insbesondere einer Fahrzeugwand, für ein stangenartiges Kraftübertragungsmittel, insbesondere einen Handbremshebel, wobei die Abdeckung einen Öffnungsbereich mit einer Durchgangsöffnung zur Durchführung des Kraftübertragungsmittels und einen Abstützbereich zur ihrer Abstützung an der Wand aufweist und der Öffnungsbereich der Abdeckung zur Anpassung an eine Lageveränderung des betätigten Kraftübertragungsmittels in einer Bewegungsebene zumindest etwa senkrecht zu einer Öffnungsachse der Durchgangsöffnung lageveränderlich zur Durchführung und bewegungswirksam an das Kraftübertragungsmittel ankoppelbar ist.

Derartige Abdeckungen sind hinlänglich bekannt. Ein Problem bei derartigen Abdeckungen ist, dass innerhalb einer komplexen Vorrichtung, wie die eines Autos, eine Vielzahl von Toleranzen zusammenwirkender Bauteile auftreten, die zudem innerhalb gefertigter Autos unterschiedlich ausfallen. Daher müssen derartige Durchführungen entsprechend groß konzipiert werden, um sicherzustellen, dass das Kraftübertragungsmittel bei allen Autos funktionssicher in der Durchführung betätigt werden kann. Daher sind die Durchführungen in der Regel größer als der Querschnitt des Kraftübertragungsmittels ausgelegt und bedürfen einer Abdeckung. Zudem kann die Gefahr auftreten, dass ein Benutzer bei Betätigung des Kraftübertragungsmittels seine Finger zwischen beispielsweise Kraftübertragungsmittel und Karosserie einklemmt.

Beispielsweise wird in der DE 29 32 317 C2 eine gattungsgemäße Abdeckung beschrieben, die, aufwendig aufgebaut, sich seitlich in Aufnahmenuten hinein erstreckt und in denselben in Bewegungsebene verschieblich gelagert ist, wobei hier weiterhin die Einklemmgefahr gegeben ist.
Üblich ist auch eine aufwendige Abdeckung in Form einer flexiblen Manschette, häufig ähnlich einem Blasbalg, wie sie beispielsweise in der EP 0 212 664 B1 beschrieben wird, wobei der Öffnungsbereich an dem Kraftübertragungsmittel lagefixiert ist. Hierdurch kann die Einklemmgefahr zwar verringert werden. Die Manschette wird jedoch stark beansprucht, wodurch die Abdeckung wenig haltbar ist.

In der DE 100 24 766 A1 wird ein Schiebesitz zweier übergreifender Teile, des Öffnungsrandes mit einem außen auf den Öffnungsbereich verschieblich aufsitzenden Abdeckungsrand, vorgeschlagen.

Die EP 335 129 A1 offenbart eine einfache als flexible Tülle ausgebildete Abdeckung, wobei das Kraftübertragungsmittel aufwendig beispielsweise in Form eines Bowdenzug durch ein durch die Durchführung durchgeführtes Rohr geführt ist, so dass die Bewegung des betätigten Kraftübertragungsmittel geschützt in dem Rohr stattfindet. Die DE 201 20 9232 U1 offenbart eine Abdeckung für einen Handbremshebelspalt in einer Konsole eines Kraftzeuges, die am Handbremshebel befestigbar ist und bei einer Schwenkbewegung des Handbremshebels in Richtung der Schwenkbewegung zusammenschiebbar und in entgegengesetzter Richtung dehnbar ist.

Der Erfindung liegt daher die Aufgabe zugrunde, eine Abdeckung der eingangs genannten Art bereitzustellen, bei der bei Betätigung des Kraftübertragungsmittels die Einklemmgefahr gemindert ist und die einfach aufgebaut ist.

Die gestellte Aufgabe wird erfindungsgemäß durch die Merkmale des Anspruches 1 gelöst. Vorteilhafte Weiterbildungen werden in den anhängenden Unteransprüchen beschrieben. Die gestellte Aufgabe wird insbesondere dadurch gelöst, dass zur zumindest teilweisen flächigen Abdeckung der Durchführung ein flexibles Wandelement vorgesehen ist, das mit dem Öffnungsbereich und dem Abstützbereich verbunden ist oder mit dem Öffnungsbereich und der Durchführung verbindbar ist und zumindest einen Zwischenraum zwischen Abstützbereich und Durchgangsöffnung überdeckt. Zudem weist die Abdeckung eine Federvorrichtung auf, mittels derer das flexible Wandelement spannbar ist.

Mittels der Federvorrichtung kann das flexible Wandelement zwischen Abstützbereich und Öffnungsbereich bzw., in Einbaulage, zwischen Öffnungsbereich und Durchführung unter Federkraft gespannt gehalten werden. Der Öffnungsbereich kann relativ zum Abstützbereich so gehalten werden, dass das Wandelement stets optimal zwischen Abstützbereich und Öffnungsbereich bzw., in Einbaulage, zwischen Öffnungsbereich und Durchführung gespannt ist. Ferner können durch das Spannen des flexiblen Wandelementes zusätzliche und eventuell wechselnde Faltungen der Abdeckung bei Betätigung des Kraftübertragungsmittels zumindest vermindert werden, die ansonsten eine Bruchund/oder Rissbildung in der Abdeckung einleiten können. Das flexible Wandelement steht in Einbaulage mittels des Öffnungsbereiches oder der Durchgangsöffnung bezüglich der Bewegung des Kraftübertragungsmittels in der Bewegungsebene in einer Wirkverbindung mit dem Kraftübertragungsmittel. Dank der Federvorrichtung kann die Abdeckung automatisch an Abweichungen von einer vorgeschriebenen relativen Lage von Kraftübertragungsmittel und Durchführung infolge der auftretenden Toleranzen angepasst werden. Dies kann so erfolgen, dass das flexible Wandelement stets gespannt bleibt. Infolge der Spannung kann die Abdeckung ferner in ihrer Form mechanisch stabilisiert werden. Das Wandelement ist in Einbaulage vorzugsweise außen angeordnet. Das flexible Wandelement kann so angeordnet sein, dass es insbesondere Stellen überdeckt, an denen eine Klemmgefahr gegeben ist. Es können auch mehrere Wandelemente vorgesehen sein. Diese können sich überlappen.

Der Öffnungsbereich kann in Einbaulage in Längserstreckung des Kraftübertragungsmittels bewegbar, insbesondere verschieblich an dem Kraftübertragungsmittel gelagert sein. Die Federvorrichtung kann bei Auslenkung des Öffnungsbereiches relativ zum Abstützbereich eine Rückstellkraft auf den Öffnungsbereich ausüben. Damit kann der Öffnungsbereich bezüglich der Öffnungsachse bzw. in Einbaulage bezüglich der Längserstreckung des Kraftübertragungsmittels zumindest etwa in einem bestimmten Abstand zu dem Abstützbereich gehalten werden. Hierbei kann sich der Öffnungsbereich in einer Schutzposition befinden. In der Schutzposition kann beispielsweise die Abdeckung so gespannt oder gestrafft sein, dass typische Fingerfallen, wie spaltartige Beabstandung von Kraftübertragungsmittel und Fahrzeugwand im Bereich der Durchführung oder Faltungen einer vorgesehenen flexiblen Manschette, überspannt und damit dem Zugriffsbereich des Benutzers entzogen werden. Die Schutzposition kann konstruktiv so eingestellt sein, dass in dieser besonders gefährdende Bereiche der Durchführung im Zusammenspiel mit dem Kraftübertragungsmittel durch die Abdeckung unzugänglich sind. In der Schutzposition kann auch ein maximaler Abstand der Durchgangsöffnung zum Abstützbereich hergestellt sein. Die Federvorrichtung kann bei Auslenkung des Öffnungsbereiches relativ zum Abstützbereich aus der Schutzposition heraus eine Rückstellkraft in Richtung zur Schutzposition hin auf den Öffnungsbereich ausüben. Infolge der verschieblichen Lagerung des Öffnungsabschnittes an dem Kraftübertragungsmittel kann der Abstand der Durchgangsöffnung zum Abstützbereich und damit zur Durchführung stets in Bezug zur Schutzposition optimiert, d.h. zumindest der Schutzposition angenähert werden.

Vorzugsweise ist die Federvorrichtung so ausgelegt, dass sie eine Federkraft in Bewegungsebene und senkrecht hierzu auf den Öffnungsbereich ausüben kann. Infolge der verschieblichen Lagerung des Öffnungsbereichs an dem Kraftübertragungsmittel kann mittels der Federvorrichtung die relative Lage von Öffnungsbereich und Abstützbereich zueinander in Längserstreckung des Kraftübertragungsmittels bezüglich der vorgegebenen oder eingestellten Schutzposition automatisch optimiert werden. Somit kann sichergestellt werden, dass die Schutzposition nicht mehr als konstruktiv unbedingt notwendig verlassen wird.

Das Spannen der Abdeckung mittels der Federvorrichtung kann als besonderes Designmerkmal dienen.

Zur leichten Mitnahme des Öffnungsbereiches kann die Öffnungsquerschnittsfläche der Durchgangsöffnung dem Querschnitt des Kraftübertragungsmittels zumindest in etwa angepasst sein. Zur leichten Verschieblichkeit kann bezüglich der Bewegungsebene zwischen Kraftübertragungsmittel und Durchgangsöffnung ein ausreichend großes Spiel vorgesehen sein. Ferner können innenseitig der Durchgangsöffnung und/oder an dem Kraftübertragungsmittel konstruktiv Reibung mindernde Vorkehrungen getroffen sein, indem beispielsweise zumindest eine der aneinander abgleitenden Oberflächen geglättet ist und/oder ein Reibung mindernder Belag oder Beschichtung vorgesehen ist. Der Öffnungsbereich kann in Einbaulage bezüglich der Bewegungsebene kraftschlüssig, bevorzugt formschlüssig mit dem Kraftübertragungsmittel verbunden sein. Es kann vorgesehen sein, dass ein Verschiebungsweg des Öffnungsbereichs auf dem Kraftübertragungsmittel mittels vorzugsweise einstellbaren Abschlägen begrenzt wird, die vorzugsweise an dem Kraftübertragungsmittel angeordnet sind.

Mittels des Abstützbereichs kann die Abdeckung an der Wand festgelegt sein. Vorzugsweise ist der Abstützbereich an der Wand bzw. an der Durchführung verrastbar.

Vorzugsweise weist die Abdeckung einen Stützkörper mit Öffnungsbereich und Abstützbereich auf. Die Federvorrichtung kann in dem Stützkörper integriert sein. Somit kann die Federvorrichtung zusammen mit dem Stützkörper hergestellt, als Modul bevorratet und eingebaut werden.

Die Federvorrichtung kann Federelemente aufweisen die jeweils mittels eines als Abstützende ausgebildeten Endes kraft- und/oder formschlüssig mit dem Abstützbereich verbunden sind und/oder mittels eines als Kraftende ausgebildeten Endes kraft- und/oder formschlüssig mit dem Öffnungsbereich verbunden sind. Die Federelemente können mittels ihrer Kraftenden zumindest teilweise den Öffnungsbereich ausbilden. Die Federelement können somit in Einbaulage mittelbar über den Öffnungsbereich oder, indem sie den Öffnungsbereich zumindest teilweise ausbilden, unmittelbar eine Federkraft in das Kraftübertragungsmittel einleiten. Es können einige Federelemente mittelbar über den Öffnungsbereich, andere unmittelbar eine Federkraft in das Kraftübertragungsmittel einleiten. Es kann zumindest eines der Federelemente an zumindest eine Stelle mit dem Wandelement fest verbunden sein. Damit kann das Wandelement an dem Federelement abgestützt werden. Mittels dieses Federelementes kann die Außenkontur des Wandelementes gestaltet werden, indem beispielsweise eine gefährdende Stelle an der Durchführung überbrückt wird. Vorzugsweise sind zumindest eine Reihe der Federelemente mit dem Wandelement fest verbunden.

Das Federelement oder die Federelemente können länglich ausgebildet und über ihre Längserstreckung mit dem Wandelement fest verbunden sein. Hierdurch können die Federelemente das Wandelement rippenartig abstützen.

Die Federelemente können einzelne Bauteile aus Kunststoff oder Metall, vorzugsweise aus Federstahl, sein. Die Federelemente können mittels einer Rastverbindung, mittels Klebens oder mittels formschlüssigen Einpassens unter beispielsweise partiellem Erweichen des Kunststoffes des Stützkörpers oder federwirksam an dem Stützkörper festgelegt werden. Als Federtypen kommen letztlich all diejenigen infrage, mittels derer das flexible Wandelement gespannt gehalten werden kann, insbesondere mittels derer die gewünschte Federkraft in den Öffnungsbereich einleitbar ist. Vorzugsweise sind die Federelemente stoffschlüssig in den Stützkörper integriert. Die Federelemente können aus einem Kunststoff für Federn gefertigt sein. Hierzu kann der Stützkörper mittels des Zweikomponenten-Spritzgussverfahrens mit einem Kunststoff für den Abstützbereich und den Öffnungsbereich und einem anderen Kunststoff für die Federelemente hergestellt sein.

Zur Einleitung einer räumlich gleichen Federkraft in den Öffnungsbereich bzw., in Einbaulage, in das Kraftübertragungsmittel können die Federelemente bezüglich der Durchgangsöffnung umfänglich beabstandet, vorzugsweise gleich beabstandet, zueinander angeordnet sein. Vorzugsweise leiten die Federelemente jeweils eine gleiche radiale Federkraftkomponente in den Öffnungsbereich bzw., in Einbaulage, in das Kraftübertragungsmittel ein. Hiermit ist eine symmetrische Federkrafteinleitung möglich.

Die Kraftenden der Federelemente können gegenüber deren jeweiliges Abstützende um einen Torsionswinkel größer Null Grad verdreht sein. Dies kann insbesondere bei länglichen Federelementen, wie Blattfedern, vorteilhaft sein, da infolge einer verbesserten Steifigkeit die Federelemente in sich und zueinander mechanisch stabilisiert werden können. Zudem kann die Federkraft ein entsprechendes Torsionsmoment aufweisen, die im Zusammenwirken der die Federelemente an dem Öffnungsbereich zweckmäßig aufheben, aber zugleich den Öffnungsbereich verspannen und damit Lagestabilisieren können. Ein optimaler Torsionswinkel hängt von konstruktiven Gegebenheiten und Anforderungen ab. Er kann mehrere Windungen, d.h. ein Mehrfaches von 360° betragen. Vorzugsweise beträgt der Torsionswinkel mindestens 30°, vorzugsweise mindestens 60° oder idealerweise mindestens 90°.

Die Federelemente können in einer Ausbildung der Abdeckung als Federzungen ausgebildet sein. Diese können mittels Einschnitte oder Spalten seitlich begrenzt werden. Die Einschnitte können sich von der Durchgangsöffnung zumindest in etwa radial nach außen erstrecken. Bei dieser Ausbildung der Federelemente kann die Durchgangsöffnung unmittelbar zumindest partiell durch die Federelemente begrenzt werden.

In einer bevorzugten Ausbildung der Abdeckung können die Federelemente als längliche, insbesondere streifenartige Blattfederelemente ausgebildet sein. Sie können einen etwa U-förmigen Verlauf mit zwei Schenkeln aufweisen, wobei ein erster Schenkel das Kraftende und ein zweiter Schenkel das Abstützende aufweisen kann. Die Schenkel können sich zumindest mit einer Haupterstreckungskomponente zumindest etwa in Richtung der Öffnungsachse bzw. zumindest etwa senkrecht zur Bewegungsebene erstrecken.

Der Öffnungsbereich kann ringartig ausgebildet sein. Der Öffnungsbereich kann als Hohlzylinderabschnitt gefertigt sein, der die Durchgangsöffnung begrenzt. Vorzugsweise greifen die Federelemente an einer in Einbaulage der Durchführung zugewandten unteren Hälfte an dem Hohlzylinderabschnitt, bevorzugt radial außen an seiner unteren Stirnseite an.

Die Zwischenräume zwischen den beabstandeten Federelementen können jeweils mittels des flexiblen Wandelementes ausgefüllt sein. Das Wandelement kann in der Schutzposition flächig zwischen den jeweils zugeordneten Federelementen gespannt sein. Es können auch mehrere oder alle Zwischenräume mittels eines einzigen flächigen Wandelementes überspannt sein. Vorzugsweise ist das Wandelement oder sind die Wandelemente an den Federelementen, vorzugsweise mit deren Kraftenden und/oder Abstützenden verbunden, bevorzugt stoffschlüssig verbunden oder verklebt. Vorzugsweise ist der Stützkörper, vorzugsweise einschließlich des Wandelementes oder der Wandelemente, einstückig ausgebildet.

In einer bevorzugten Ausbildung der Abdeckung ist das flexible Wandelement als Manschette ausgebildet. Wie bereits oben ausgeführt, kann das Wandelement bzw. die Manschette mittels der Federvorrichtung gespannt gehalten werden. Es kann in der Schutzposition so gespannt gehalten werden, dass es in Einbaulage nach außen hin glatt gespannt ist. Das Wandelement bzw. die Manschette kann mit dem Stützkörper vorzugsweise partiell verbunden, insbesondere verklebt sein. In einer bevorzugten Ausbildung ist die Manschette zumindest über einen schmalen und bezüglich der Durchgangsöffnung umfänglichen Abschnitt zumindest partiell oder an mehreren Stellen jeweils mit dem Öffnungsbereich und dem Abstützbereich verbunden, insbesondere verklebt. Vorzugsweise ist die Manschette vollumfänglich jeweils über den Abschnitt mit dem Öffnungsbereich und dem Abstützbereich verbunden, insbesondere verklebt. Somit kann die Abdeckung vollständig vorgefertigt und in der Montage als Modul eingesetzt werden. Vorzugsweise überdeckt das Wandelement bzw. die Manschette den Stützkörper bis auf die in Einbaulage der Durchführung abgewandten, als Oberseite ausgebildete Seite des Öffnungsbereiches vollständig. Das Wandelement kann den Stützkörper seitlich mit einem vorzugsweise vollumfänglichen Rand umgreifen.

Vorzugsweise sind der Stützkörper und das Wandelement bzw. die Manschette als ein einziges einstückiges Bauteil oder jeweils als ein einstückiges Bauteil ausgebildet. Insbesondere können der Stützkörper und das flexible Wandelement bzw. die Manschette als ein einziges einstückiges Spritzgussteil oder jeweils als ein einstückiges Spritzgussteil ausgebildet sein.

Vorzugsweise sind die Manschette und der Stützkörper mittels MehrKomponenten-Spritzgussverfahren hergestellt, wobei der Stützkörper vorzugsweise aus einem anderen Kunststoff als die Manschette hergestellt sein kann. Vorzugsweise weist der Kunststoff des Stützkörpers einen Kunststoff höherer Festigkeit als der der Manschette auf. Der Kunststoff der Manschette kann wiederum flexibler als der des Stützkörpers sein. Bevorzugter Werkstoff ist in allen Fällen Kunststoff.

Zum seitlichen Einschieben des Kraftübertragungsmittels in die Durchgangsöffnung hinein kann ein seitlicher Schlitz vorgesehen sein, der sich von der Außenkontur bis in die Durchgangsöffnung hinein erstreckt. Vorzugsweise ist der Schlitz so ausgebildet, dass seine Schlitzränder in Nichteinbaulage soweit voneinander beabstandet werden können, dass das Kraftübertragungsmittel seitlich bzw. zumindest etwa senkrecht zur Öffnungsachse in die Durchgangsöffnung einschiebbar ist. In Einbaulage können die Schlitzränder so zueinander bringbar sein, dass sie unmittelbar aneinander anliegen. Hierdurch kann der Schlitz in Einbaulage lediglich durch aneinanderliegenden Formkanten in Erscheinung treten. Vorzugsweise erstreckt sich der Schlitz in einer Erstreckungsrichtung in die Durchgangsöffnung hinein, die in Einbaulage in Fahrtrichtung des Fahrzeuges weist. Vorzugsweise weist der Schlitz von der Durchgangsöffnung zur Außenkontur der Abdeckung gegen Fahrtrichtung.

Die Abdeckung kann an der Durchführung verrastet sein. Hierzu können seitliche Verrastungsmittel vorgesehen sein, die innenseitig an der Durchführung verrasten. Die Verrastungsmittel können Rastvorsprünge sein, die bezüglich der Öffnungsachse umfänglich beabstandet vorzugsweise seitlich an dem Abstützende angeordnet sein können.

Die vorliegende Erfindung wird im Folgenden mit Hilfe zweier in einer Zeichnung dargestellten Ausführungsformen näher erläutert. In der Zeichnung zeigen:
- Fig. 1: eine perspektivische Unteransicht einer ersten Ausführungsform einer Abdeckung mit einem eine Durchgangsöffnung aufweisenden Öffnungsbereich eines Stützkörpers für ein hier nicht gezeigtes Kraftübertragungsmittel,
- Fig. 2: eine perspektivische Draufsicht auf einen Ausschnitt III der ersten Ausführungsform der Abdeckung mit dem Öffnungsbereich,
- Fig. 3: eine perspektivische Draufsicht auf den Stützkörper der ersten Ausführungsform des Abdeckung und
- Fig. 4: eine perspektivische Draufsicht auf eine zweite Ausführungsform der Abdeckung.

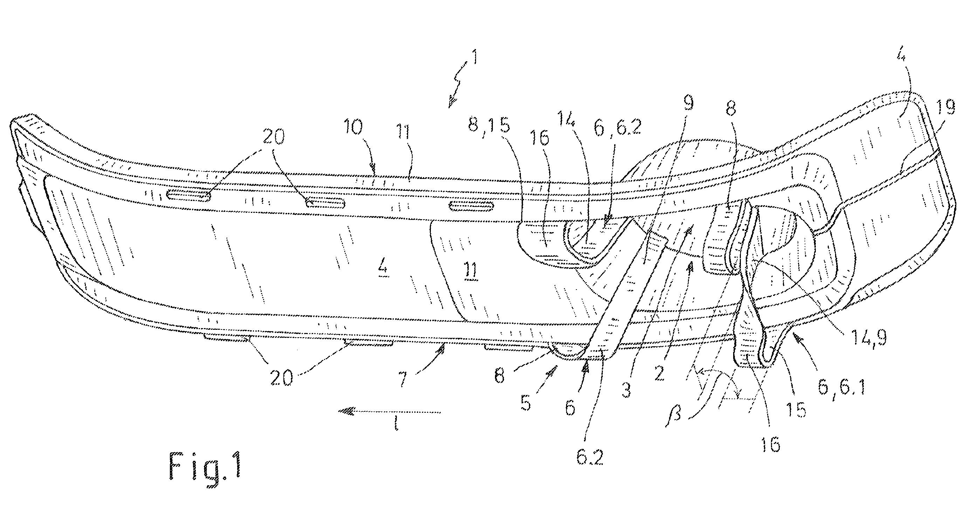

In den Figuren 1 bis 4 werden zwei Ausführungsformen einer Abdeckung 1 für eine hier nicht gezeigte Durchführung in einer nicht gezeigten Wand, insbesondere einer Fahrzeugwand, für ein nicht gezeigtes stangenartiges Kraftübertragungsmittel, insbesondere einen Handbremshebel, dargestellt. Die Abdeckung 1 weist jeweils einen Öffnungsbereich 2 mit einer Durchgangsöffnung 3 zur Durchführung des Kraftübertragungsmittels und einen Abstützbereich 4 zur ihrer Abstützung an der Wand auf. Der Öffnungsbereich 2 der Abdeckung 1 ist so ausgebildet, dass er zur Anpassung an eine Lageveränderung des betätigten Kraftübertragungsmittels zumindest in einer Bewegungsebene zumindest etwa senkrecht zu einer Öffnungsachse a der Durchgangsöffnung 1 lageveränderlich zur Abstützbereich 4 bzw., in hier nicht gezeigter Einbaulage in der Durchführung, lageveränderlich zur Durchführung ist. Der Öffnungsbereich 2 der Abdeckung 1 ist bezüglich der Bewegungsebene bewegungswirksam an das Kraftübertragungsmittel ankoppelbar. Hierzu ist der Öffnungsquerschnitt der Durchgangsöffnung 3 dem Querschnitt des hier nicht gezeigten Kraftübertragungsmittels so angepasst, dass der Öffnungsbereich 2 in Einbaulage an dem Kraftübertragungsmittel seitlich gleitverschieblich anliegt. Dadurch wird der Öffnungsbereich 2 durch die Betätigung des Kraftübertragungsmittels in der Bewegungsebene senkrecht zur Öffnungsachse a bewegt, während der Öffnungsbereich 2 mit Bewegung des Kraftübertragungsmittels in Richtung der Öffnungsachse a an dem Kraftübertragungsmittel abgleitet.

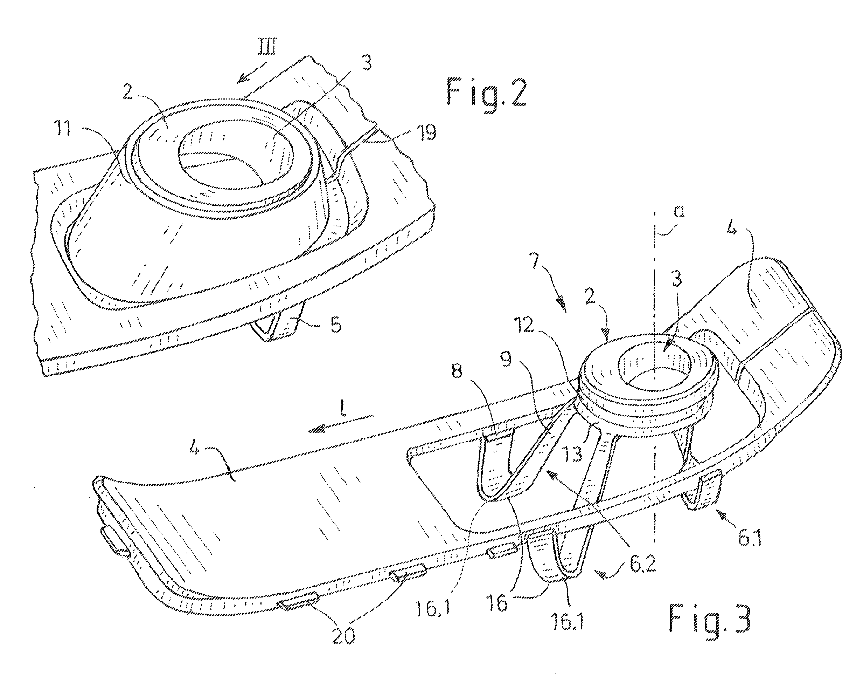

Abstützbereich 4 und Öffnungsbereich 2 bzw. Durchgangsöffnung 3 sind in einer in Figur 1, 2 und 4 gezeigten Schutzposition voneinander beabstandet. Hierzu ist eine Federvorrichtung 5 mit Federelementen 6 vorgesehen, mittels derer der Öffnungsbereich 2 gehalten gegenüber dem Abstützbereich 4 wird. Die Federvorrichtung 5, der Öffnungsbereich 2 und der Abstützbereich 4 bilden einen Stützkörper 7 aus. Die Federvorrichtung 5 ist somit in dem Stützkörper 7 integriert. Der Stützkörper 7 ist hier ein einstückiges Kunststoff-Spritzgussteil. Der Stützkörper 7 ist in Figur 3 in einer Einzeldarstellung gezeigt. Dieser ist deutlich entnehmbar, dass Federelemente 6 beinartig an dem Öffnungsbereich 2 angreifen und denselben in einer Ebene oberhalb des Abstützbereiches halten.

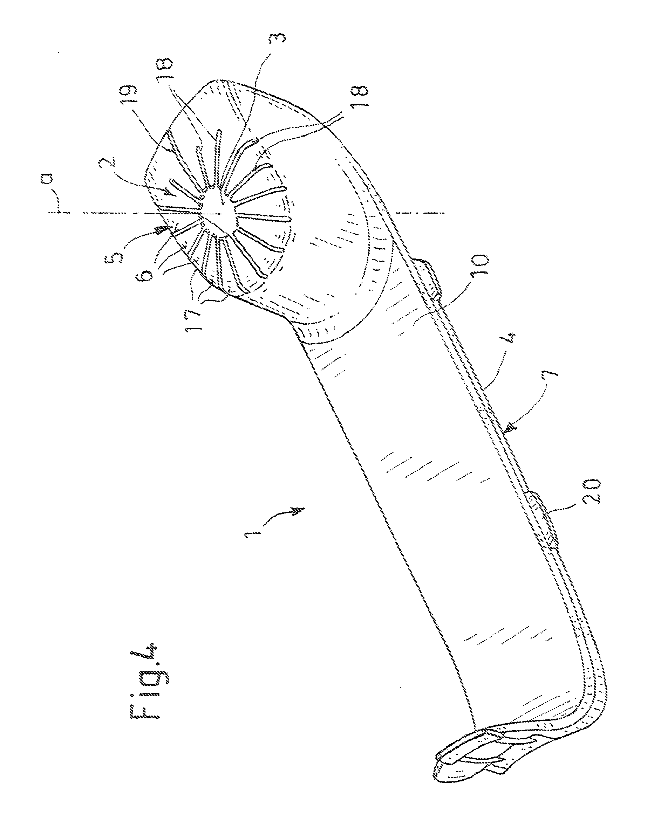

Die Federelemente 6 sind jeweils mittels eines als Abstützende 8 ausgebildeten Endes stoffschlüssig mit dem Abstützbereich 4 verbunden. Ferner sind die Federelemente 6 bezüglich der Durchgangsöffnung 3 umfänglich beabstandet zueinander angeordnet. In der ersten Ausbildungsform der Abdeckung 1 gemäß den Figuren 1 bis 3 sind die Federelemente 6 mittels eines als Kraftende ausgebildeten Endes stoffschlüssig mit dem Öffnungsbereich 2 verbunden. Damit greifen die Federelemente 6 in Einbaulage mittelbar an dem Kraftübertragungsmittel an. Abweichend hierzu bilden die Federelemente 6 in der zweiten Ausbildungsform der Abdeckung 1 gemäß Figur 4 den Öffnungsbereich 2 und begrenzen in diesem die Durchgangsöffnung 3 mittels ihrer Kraftenden 9. Damit greifen die Federelemente 6 in Einbaulage unmittelbar an dem Kraftübertragungsmittel an. In beiden Fällen wird bei einer Auslenkung der Federelemente 6 eine Rückstellkraft auf den Öffnungsbereich 2 ausgeübt.

Die Abdeckung 1 weist zudem ein flexibles, flächiges Wandelement 10 auf, das den Stützkörper 7 bis auf die Oberseite des Öffnungsbereiches 2 von oben her vollständig überdeckt. Das Wandelement 10 ist in der ersten Ausführungsform der Abdeckung 1 als Manschette 11 ausgebildet, die an dem Öffnungsbereich 2 und dem Abstützbereich 4 festgelegt, hier mit denselben verklebt ist. Der Öffnungsbereich 2 weist hier eine hohlzylindrische Form mit einem Zylindermantel als Aufnahme 12 mit einem Aufnahmeanschlag 13 auf. Zum Zusammenbau der Abdeckung 1 wird die Manschette 11 so über die äußere Aufnahme 12 aufgezogen, dass sie flächig und umfänglich an der Aufnahme 12 und in ihrer korrekten Positionierung unterseitig an dem radialen nach außen weisenden Aufnahmeanschlag 13 anliegt. Ferner liegt die Manschette 11 oberseitig an dem Abstützbereich 4 an. Die Festlegung der Manschette 11 an dem Stützkörper 7 erfolgt unter Vorspannung der Federelemente 6. Durch die Vorspannung wird die flexible Manschette 1 entsprechend gespannt oder gestrafft gehalten. Die Abdeckung 1 befindet sich hiermit in einer Schutzposition, in der sie in Einbaulage die Durchführung bis auf den Teil des Öffnungsbereiches 2 vollständig überdeckt, ohne sogenannte Fingerfallen zum Einklemmen der Finger des hier nicht gezeigten Benutzers aufzuweisen. Wird der Öffnungsbereich 2 relativ zum Abstützbereich 4 in Richtung der Öffnungsachse a und/oder senkrecht hierzu ausgelenkt, so üben, in Einbaulage mit statisch festgesetztem Abstützbereich 4, die Federelemente 6 auf den Öffnungsbereich 2 eine Rückstellkraft zurück zur Schutzposition hinaus.

In der ersten Ausführungsform der Abdeckung 1 sind die Federelemente 6 als längliche Blattfederelemente mit einem etwa U-förmigen Verlauf mit zwei Schenkeln, einem ersten Schenkel 14 und einem zweiten Schenkel 15, und einem diese verbindenden Umlenkbereich 16 ausgebildet. Der erste Schenkel 14 weist das Kraftende 9 auf; der zweite Schenkel 15 umfasst das Abstützende 8. Beide Schenkel 14, 15 erstrecken sich etwa in Richtung der Öffnungsachse a.

Die Kraftenden 9 der Federelemente 6 sind gegenüber deren jeweiliges Abstützende 7 um einen Torsionswinkel ß größer Null Grad verdreht. In der ersten Ausführungsform der Abdeckung 1 greifen vier Federelemente 6 an dem Öffnungsbereich 2 an, von denen jeweils zwei paarig zusammenwirken und, bezüglich einer die Öffnungsachse a enthaltenden Längschnittebene, spiegelsymmetrisch aufgebaut und zueinander angeordnet sind. Zwei in Figur 1 und 3 rechts angeordnete erste Federelemente 6.1 sowie zwei in Figur 1 und 3 links angeordnete zweite Federelemente 6.2. Hiermit wird eine entsprechende symmetrische Federkraft auf den Öffnungsbereich 2 ausgeübt. Die ersten Federelemente 6.1 weisen einen Torsionswinkel ß von etwa 90° auf. Die Verdrehung der Federelemente 6.1 vergrößert allgemein deren Steifigkeit und Rückstellkraft zur Schutzposition hin. Die spiegelsymmetrische Anordnung der Federelemente 6.1, 6.2 bewirkt zudem eine Verspannung der Federelemente 6.1, 6.2 an dem Abstützbereich 4 und dem Öffnungsbereich 2. Da die zweite Ausführungsform der Abdeckung 1 für einen hier nicht gezeigten Bremshebel ausgelegt ist, der zu seiner Betätigung im Wesentlichen in Richtung der Öffnungsachse a durch die Durchgangsöffnung 3 bewegbar ist, sind, um eine in Richtung der Öffnungsachse a zu erwartende Kraft mechanisch günstig aufnehmen zu können, die Schenkel 14, 15 der zweiten Federelemente 6.2 in Längsrichtung I der Abdeckung 1 beabstandet zueinander angeordnet.

Abweichend zu dem Stützkörper 7 gemäß Figur 1 ist der Umlenkbereich 16 der Federelemente 6.2 jeweils als Verbindungsteil 16.1 ausgebildet, in das die Schenkel 15 endseitig gesteckt und verklebt sind. Das Verbindungsteil 16.1 ist zur Erhöhung der Steifigkeit der Federelemente 6.2 aus Kunststoff erhöhter Festigkeit oder Metall gefertigt. Dadurch kann der Stützkörper 7 spezifischen Anforderungen angepasst werden, indem beispielsweise bestimmte Federsteifigkeiten der Federelemente 6.2 eingestellt sowie Öffnungsbereiche 2 und Abstützbereiche 4 unterschiedlicher Abmessungen miteinander kombiniert werden.

In der zweiten Ausführungsform der Abdeckung 1 sind die Federelemente 6 als Federzungen 14 ausgebildet sind, die mittels Einschnitten 15 seitlich begrenzt werden. Die Einschnitte 15 erstrecken sich von der Durchgangsöffnung 3 zumindest in etwa radial nach außen und begrenzen radial innen die Durchgangsöffnung 3. Stützkörper 7 und Wandelement 10 sind in dieser Ausführungsform der Abdeckung 1 flächig zu einer Einheit verbunden.

In der Abdeckung 1 ist zum seitlichen Einschieben des Kraftübertragungsmittels in die Durchgangsöffnung 3 hinein ein seitlicher Schlitz 19 vorgesehen, der sich in Längsrichtung I von der Außenkontur der Abdeckung 1 bis in die Durchgangsöffnung 3 hinein erstreckt.

In beiden Ausführungsformen sind zur Ausbildung einer Rastverbindung seitliche Rastvorsprünge 20 vorgesehen, mittels derer die Abdeckung 1 an der hier nicht gezeigten Durchführung mittels dort vorgesehenen Rastmitteln in einen Rastsitz hinein verrasten kann.

### BEZUGSZEICHENLISTE

- 1: Abdeckung
- 2: Öffnungsbereich
- 3: Durchgangsöffnung
- 4: Abstützbereich
- 5: Federvorrichtung
- 6: Federelement
- 6.1: Erstes Federelement
- 6.2: Zweites Federelement
- 7: Stützkörper
- 8: Abstützende
- 9: Kraftende
- 10: Wandelement
- 11: Manschette
- 12: Aufnahme
- 13: Aufnahmeanschlag
- 14: erster Schenkel
- 15: zweiter Schenkel
- 16: Umlenkbereich
- 16.1: Verbindungsteil
- 17: Federzunge
- 18: Einschnitt
- 19: Schlitz
- 20: Rastvorsprung
- a: Öffnungsachse
- I: Längsrichtung
- ß: Torsionswinkel

## Patentansprüche

1. Abdeckung für eine Durchführung in einer Wand, insbesondere einer Fahrzeugwand, für ein stangenartiges Kraftübertragungsmittel, insbesondere einen Handbremshebel, wobei die Abdeckung einen Öffnungsbereich mit einer Durchgangsöffnung zur Durchführung des Kraftübertragungsmittels und einen Abstützbereich zur ihrer Abstützung an der Wand aufweist und der Öffnungsbereich der Abdeckung zur Anpassung an eine Lageveränderung des betätigten Kraftübertragungsmittels in einer Bewegungsebene zumindest etwa senkrecht zu einer Öffnungsachse der Durchgangsöffnung lageveränderlich zur Durchführung und bewegungswirksam an das Kraftübertragungsmittel ankoppelbar ist,
zur zumindest teilweisen flächigen Abdeckung der Durchführung ein flexibles Wandelement (10) vorgesehen ist, das mit dem Öffnungsbereich (2) und dem Abstützbereich (4) verbunden ist oder mit dem Öffnungsbereich (2) und der Durchführung verbindbar ist und zumindest einen Zwischenraum zwischen Abstützbereich (4) und Durchgangsöffnung (3) überdeckt, **dadurch gekennzeichnet dass** die Abdeckung (1) eine Federvorrichtung (5) aufweist, mittels derer das flexible Wandelement (10) spannbar ist.

2. Abdeckung nach Anspruch 1,
**dadurch gekennzeichnet, dass** dass der Öffnungsbereich (2) in Längserstreckung des Kraftübertragungsmittels bewegbar an dem Kraftübertragungsmittel anlagerbar ist und dass die Federvorrichtung (5) bei Auslenkung des Öffnungsbereiches (2) relativ zum Abstützbereich (4) eine Rückstellkraft auf den Öffnungsbereich (2) ausübt.

3. Abdeckung nach Anspruch 1 oder 2,
**dadurch gekennzeichnet, dass** sie einen Stützkörper (7) mit dem Öffnungsbereich (2) und dem Abstützbereich (4) aufweist und dass die Federvorrichtung (5) in dem Stützkörper (7) integriert ist.

4. Abdeckung nach einem der Ansprüche 1 bis 3,
**dadurch gekennzeichnet, dass** die Federvorrichtung (5) Federelemente (6) aufweist, die jeweils mittels eines als Abstützende (8) ausgebildeten Endes kraft- und/oder formschlüssig mit dem Abstützbereich (4) verbunden sind und/oder mittels eines als Kraftende (9) ausgebildeten Endes kraft- und/oderformschlüssig mit dem Öffnungsbereich (2) verbunden sind und/oder mittels des Kraftendes (9) den Öffnungsbereich (2) zumindest teilweise ausbilden.

5. Abdeckung nach Anspruch 4,
**dadurch gekennzeichnet, dass** zumindest eines der Federelemente (6) mit dem Wandelement (10) fest verbunden ist.

6. Abdeckung nach Anspruch 4 oder 5,
**dadurch gekennzeichnet, dass** die Federelemente (6) bezüglich der Durchgangsöffnung (3) umfänglich beabstandet zueinander angeordnet sind.

7. Abdeckung nach einem der Ansprüche 4 bis 6,
**dadurch gekennzeichnet, dass** die Kraftenden (9) der Federelemente (6) gegenüber deren jeweiligem Abstützende (7) um einen Torsionswinkel (β) größer Null Grad verdreht sind.

8. Abdeckung nach einem der Ansprüche 4 bis 7,
**dadurch gekennzeichnet, dass** die Federelemente (6) als längliche Blattfederelemente mit einem etwa U-förmigen Verlauf mit Schenkeln (14, 15) ausgebildet sind, die sich zumindest mit einer Haupterstreckungskomponente etwa in Richtung der Öffnungsachse (a) erstrecken, wobei ein erster Schenkel (14) das Kraftende (9) und ein zweiter Schenkel (15) das Abstützende (8) aufweist.

9. Abdeckung nach einem der Ansprüche 4 bis 7,
**dadurch gekennzeichnet, dass** die Federelemente (6) als Federzungen (17) ausgebildet sind, die mittels Einschnitten (18) seitlich begrenzt werden, wobei sich die Einschnitte (18) von der Durchgangsöffnung (3) zumindest in etwa radial nach außen erstrecken.

10. Abdeckung nach einem der Ansprüche 1 bis 9,
**dadurch gekennzeichnet, dass** der Öffnungsbereich (2) ringartig ausgebildet ist.

11. Abdeckung nach einem der Ansprüche 1 bis 10,
**dadurch gekennzeichnet, dass** das flächige Wandelement (10) als Manschette (11) ausgebildet ist, die den Stützkörper (7) in Einbaulage zumindest im Wesentlichen überdeckt.

12. Abdeckung nach Anspruch 11,
**dadurch gekennzeichnet, dass** die Manschette (11) bezüglich der Durchgangsöffnung (3) umfänglich jeweils an dem Abstützbereich (4) und Öffnungsbereich (2) des Stützkörpers (7) festgelegt ist.

13. Abdeckung nach Anspruch 11 oder 12,
**dadurch gekennzeichnet, dass** die Manschette (17) und Stützkörper (7) als ein einstückiges Spritzgussteil oder jeweils als ein einstückiges Spritzgussteil ausgebildet sind.

14. Abdeckung nach einem der Ansprüche 1 bis 13,
**dadurch gekennzeichnet, dass** zum seitlichen Einschieben des Kraftübertragungsmittels in die Durchgangsöffnung (3) hinein ein seitlicher Schlitz (19) vorgesehen ist, der sich von der Außenkontur bis in die Durchgangsöffnung (3) hinein erstreckt.

## Claims

1. Cover for an aperture in a wall, in particular a vehicle wall, for a rod-like force transmission means, in particular a handbrake lever, wherein the cover has an opening region with a passage opening for the passage of the force transmission means, and a supporting region for supporting said cover on the wall, and the opening region of the cover can be coupled to the force transmission means in a manner changeable in position with respect to the aperture and effectively in terms of movement for adaptation to a change in position of the actuated force transmission means in a plane of movement at least approximately perpendicular to an opening axis of the passage opening, and a flexible wall element (10) is provided for the at least partial planar covering of the aperture, said wall element being connected to the opening region (2) and to the supporting region (4) or being connectable to the opening region (2) and the aperture and covering at least an intermediate space between the supporting region (4) and passage opening (3), **characterized in that** the cover (1) has a spring device (5) by means of which the flexible wall element (10) can be tensioned.

2. Cover according to Claim 1, **characterized in that** the opening region (2) can be mounted on the force transmission means so as to be movable in the longitudinal extent of the force transmission means, and **in that** the spring device (5) exerts a restoring force on the opening region (2) when the opening region (2) is deflected relative to the supporting region (4).

3. Cover according to Claim 1 or 2, **characterized in that** it has a support body (7) with the opening region (2) and the supporting region (4), and **in that** the spring device (5) is integrated in the support body (7).

4. Cover according to one of Claims 1 to 3, **characterized in that** the spring device (5) has spring elements (6) which are each connected to the supporting region (4) in a frictional and/or form-fitting manner by means of an end designed as a supporting end (8), and/or are connected to the opening region (2) in a frictional and/or form-fitting manner by means of an end designed as a force end (9), and/or at least partially form the opening region (2) by means of the force end (9).

5. Cover according to Claim 4, **characterized in that** at least one of the spring elements (6) is fixedly connected to the wall element (10).

6. Cover according to Claim 4 or 5, **characterized in that** the spring elements (6) are arranged at a distance from one another circumferentially with respect to the passage opening (3).

7. Cover according to one of Claims 4 to 6, **characterized in that** the force ends (9) of the spring elements (6) are rotated in relation to the respective supporting end (7) thereof through a torsion angle (β) of greater than zero degrees.

8. Cover according to one of Claims 4 to 7, **characterized in that** the spring elements (6) are designed as elongate leaf spring elements having an approximately U-shaped profile with limbs (14, 15) which extend, at least with a main component of extent, approximately in the direction of the opening axis (a), a first limb (14) having the force end (9) and a second limb (15) having the supporting end (8).

9. Cover according to one of Claims 4 to 7, **characterized in that** the spring elements (6) are designed as spring tunnels (17) which are bounded laterally by means of incisions (18), the incisions (18) extending at least approximately radially outwards from the passage opening (3).

10. Cover according to one of Claims 1 to 9, **characterized in that** the opening region (2) is designed in the manner of a ring.

11. Cover according to one of Claims 1 to 10, **characterized in that** the planar wall element (10) is designed as a collar (11) which, in the fitted position, at least substantially covers the support body (7).

12. Cover according to Claim 11, **characterized in that** the collar (11) is fixed in each case to the supporting region (4) and opening region (2) of the support body (7) in a circumferential manner with respect to the passage opening (3).

13. Cover according to Claim 11 or 12, **characterized in that** the collar (11) and support body (7) are formed as a single-piece injection moulded part or are each formed as a single-piece injection moulded part.

14. Cover according to one of Claims 1 to 13, **characterized in that** a lateral slot (19) extending from the outer contour into the passage opening (3) is provided for laterally pushing the force transmission means into the passage opening (3).

## Revendications

1. Recouvrement pour un passage dans une paroi, en particulier une paroi de véhicule, pour un moyen de transfert de force de type barre, en particulier un levier de frein à main, le recouvrement présentant une région d'ouverture avec une ouverture de passage pour le passage du moyen de transfert de force et une région de support pour son support sur la paroi, et la région d'ouverture du recouvrement pouvant être accouplée au moyen de transfert de force, en vue de l'adaptation à une variation de position du moyen de transfert de force actionné dans un plan de déplacement au moins approximativement perpendiculairement à un axe d'ouverture de l'ouverture de passage, avec variation de position par rapport au passage et avec possibilité de déplacement,
un élément de paroi (10) flexible étant prévu pour recouvrir au moins en partie à plat le passage, lequel élément de paroi est connecté à la région d'ouverture (2) et à la région de support (4) ou peut être connecté à la région d'ouverture (2) et au passage, et recouvre au moins un espace intermédiaire entre la région de support (4) et l'ouverture de passage (3), **caractérisé en ce que** le recouvrement (1) présente un dispositif de ressort (5) au moyen duquel l'élément de paroi flexible (10) peut être serré.

2. Recouvrement selon la revendication 1,
**caractérisé en ce que**
la région d'ouverture (2) peut être appliquée dans l'étendue longitudinale du moyen de transfert de force de manière déplaçable contre le moyen de transfert de force et **en ce que** le dispositif de ressort (5), en cas de déviation de la région d'ouverture (2) par rapport à la région de support (4), exerce une force de rappel sur la région d'ouverture (2).

3. Recouvrement selon la revendication 1 ou 2,
**caractérisé en ce**
**qu'**il présente un corps de support (7) avec la région d'ouverture (2) et la région de support (4), et en ce que le dispositif de ressort (5) est intégré dans le corps de support (7).

4. Recouvrement selon l'une quelconque des revendications 1 à 3,
**caractérisé en ce que**
le dispositif de ressort (5) présente des éléments de ressort (6) qui sont connectés par engagement par force et/ou par coopération de forme à la région de support (4) à chaque fois au moyen d'une extrémité réalisée sous forme d'extrémité de support (8), et/ou qui sont connectés par engagement par force et/ou par coopération de forme à la région d'ouverture (2) au moyen d'une extrémité réalisée sous forme d'extrémité de force (9), et/ou constituent au moins en partie la région d'ouverture (2) au moyen de l'extrémité de force (9).

5. Recouvrement selon la revendication 4,
**caractérisé en ce**
**qu'**au moins l'un des éléments de ressort (6) est connecté fixement à l'élément de paroi (10).

6. Recouvrement selon la revendication 4 ou 5,
**caractérisé en ce que**
les éléments de ressort (6) sont disposés par rapport à l'ouverture de passage (3) de manière espacée les uns des autres sur la périphérie.

7. Recouvrement selon l'une quelconque des revendications 4 à 6,
**caractérisé en ce que**
les extrémités de force (9) des éléments de ressort (6) sont tournées d'un angle de torsion (β) supérieur à zéro degré par rapport à l'extrémité de support respective (7).

8. Recouvrement selon l'une quelconque des revendications 4 à 7,
**caractérisé en ce que**
les éléments de ressort (6) sont réalisés sous forme d'éléments de ressort à lame allongés avec une allure approximativement en forme de U avec des branches (14, 15), qui s'étendent au moins avec une composante d'étendue principale approximativement dans la direction de l'axe d'ouverture (a), une première branche (14) présentant l'extrémité de force (9) et une deuxième branche (15) présentant l'extrémité de support (8).

9. Recouvrement selon l'une quelconque des revendications 4 à 7,
**caractérisé en ce que**
les éléments de ressort (6) sont réalisés sous forme de langues à ressort (17) qui sont limitées latéralement au moyen d'entailles (18), les entailles (18) s'étendant depuis l'ouverture de passage (3) au moins approximativement radialement vers l'extérieur.

10. Recouvrement selon l'une quelconque des revendications 1 à 9,
**caractérisé en ce que**
la région d'ouverture (2) est réalisée avec une forme annulaire.

11. Recouvrement selon l'une quelconque des revendications 1 à 10,
**caractérisé en ce que**
l'élément de paroi plat (10) est réalisé sous forme de manchette (11) qui recouvre au moins sensiblement le corps de support (7) dans la position montée.

12. Recouvrement selon la revendication 11,
**caractérisé en ce que**
la manchette (11) est fixée par rapport à l'ouverture de passage (3) sur la périphérie à chaque fois sur la région de support (4) et la région d'ouverture (2) du corps de support (7).

13. Recouvrement selon la revendication 11 ou 12,
**caractérisé en ce que**
la manchette (11) et le corps de support (7) sont réalisés sous forme d'une pièce moulée par injection d'une seule pièce ou chacun sous la forme d'une pièce moulée par injection d'une seule pièce.

14. Recouvrement selon l'une quelconque des revendications 1 à 13,
**caractérisé en ce que**
pour l'insertion latérale du moyen de transfert de force dans l'ouverture de passage (3), on prévoit une fente latérale (19) qui s'étend depuis le contour extérieur jusque dans l'ouverture de passage (3).
